# EUROPEAN PATENT SPECIFICATION

(11) **EP 1 167 137 B1**
(45) Date of publication and mention of the grant of the patent: **29.03.2006**
(21) Application number: 01115286.5
(22) Date of filing: 25.06.2001
(51) Int. Cl.: B60S 1/58, B60S 1/34, E05B 65/19

(54) **Window wiper arm drive and window lock system**
Scheibenwischerarmantrieb und Fensterverriegelungssystem
Entraînement pour bras d'essuie-glace et système de verrouillage de fenêtre

(30) Priority: 30.06.2000 US 607294
(43) Date of publication of application: 02.01.2002
(73) Proprietor: Valeo Electrical Systems, Inc., Auburn Hills, Michigan 48326-2356 (US)
(72) Inventor: Ponziani, Richard L., Centerville, Ohio 45459 (US)
(74) Representative: Lemaire, Marc

(56) References cited:
- FR-A- 791 485
- FR-A- 2 544 267
- FR-A- 2 698 060
- FR-A- 2 724 616
- GB-A- 1 448 892
- GB-A- 2 141 520
- US-A- 5 519 258
- US-A- 5 844 382

## Description

This invention relates to window wiper systems and, more particularly, to a wiper system and method for coupling a wiper arm to a drive motor and also for retaining a window in a closed position.

In the field in windshield wiper systems, such as rear window wiper systems; a window wiper arm is mounted on a rear window hatch or door of a vehicle. The rear window is pivotable between an open and closed position to provide access inside the vehicle. The window wiper arm is usually directly coupled to a wiper motor which, in turn, is mounted directly on the window or below the window on the door.

In one prior art system, for example, the window wiper arm is mounted on a wiper motor which is mounted on a rear door of a vehicle. When it is desired to open the window, the window wiper arm and wiper blade are driven below the bottom of the window to permit the rear window to swing open. Unfortunately, this design approach has several disadvantages, including requiring and causing the wiper blade to be driven below the window and onto the door.

In several prior art systems, the window requires a separate latch to latch and lock the window in a closed position. Because it is desired to place the window wiper arm at an approximate center of the rear window, this latch would have to be located "off center." Because of the non-centered location of the window latch, it was not uncommon that the window would not seal properly to the door, thereby resulting in undesirable wind noise during vehicle operation or even water leakage into the interior compartment of the vehicle.

In some prior art systems, both the latch assembly, including any latch motor, and a window wiper motor were mounted in the door. Such systems oftentimes required the use of multiple motors and apparatus to accomplish the functions of wiping the window and locking the window in a closed position to the door. FR-A-2 544 267 discloses a wind screen wiper unit for vehicles with a hinged opening windscreen having wiper arms driven by a drive motor which operating shaft is in two parts, one part connected to the arm on the windscreen while the other is held in a bracket on the window opening frame. A lever connects the first shaft to the drive motor linkage.

What is needed, therefore, is a simple system and method for both wiping the window and locking the door that reduces or eliminates the problems with the prior art.

It is, therefore, a primary object of the invention to provide a system and a method for locking a window, such as a rear window, to a door and also for wiping the window free of debris.

This object is achieved by a system and a method as claimed in claims 1 and 21.

Other objects and advantages of the invention will be apparent from the following description, the accompanying drawings, and the appended claims.

### BRIEF DESCRIPTION OF THE ACCOMPANYING DRAWINGS

Fig. 1 is a fragmentary view showing a window in an open position;
Fig. 2 is a fragmentary view showing the window in a closed position;
Fig. 3 is a fragmentary view taken along the line 3-3 in Fig. 2;
Fig. 4 is a sectional view taken along the line 4-4 in Fig. 3;
Fig. 5 is a sectional view showing details of an end of the wiper arm for receipt into a receiving area and a detent engaging a locking member;
Fig. 6 is a sectional view similar to Fig. 3 showing the wiper arm in a fully locked position;
Fig. 7 is a view taken along the line 7-7 in Fig. 6 and showing a coupler in a first wipe position;
Fig. 8 is a view similar to Fig. 7 illustrating the coupler driven to a second wipe position which is opposite to the wipe position shown in Fig. 7; and
Fig. 9 is a view showing a cam member of a lock or locking member engaging a cam wall to permit the wiper arm to be biased out of the drive coupler.

### DETAILED DESCRIPTION OF THE PREFERRED EMBODIMENT

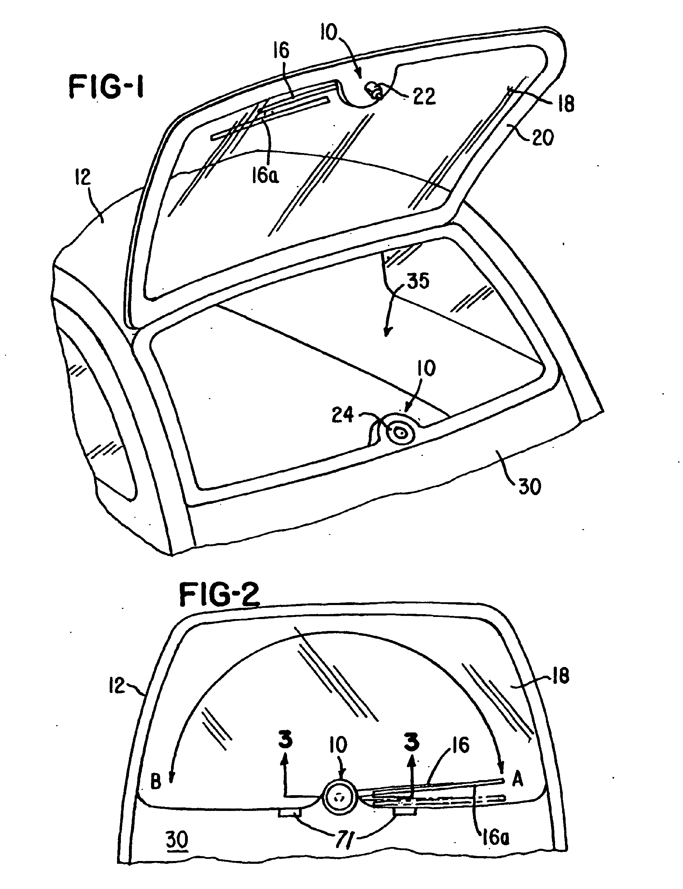

Referring now to Fig. 1, a wiper arm window latch system 10 is shown for use on a vehicle 12 having a window, such as a rear window 18 which is hingably attached to the vehicle 12 to permit movement between an open position (shown in Fig. 1) and a closed position (shown in Fig. 2). The wiper system 10 comprises a wiper arm 16 having a wiper blade 16a which is driven between a first wipe position A (shown in Fig. 2) to a second wipe position B in order to wipe the window 18 which is situated in a frame 20 (Fig. 1), free of debris, such as rain, snow or ice. Although not shown, it is envisioned that the wiper arm window latch system 10 may be used with a window 18 which itself is hingably attached to the vehicle 12 without the use of a frame 20.

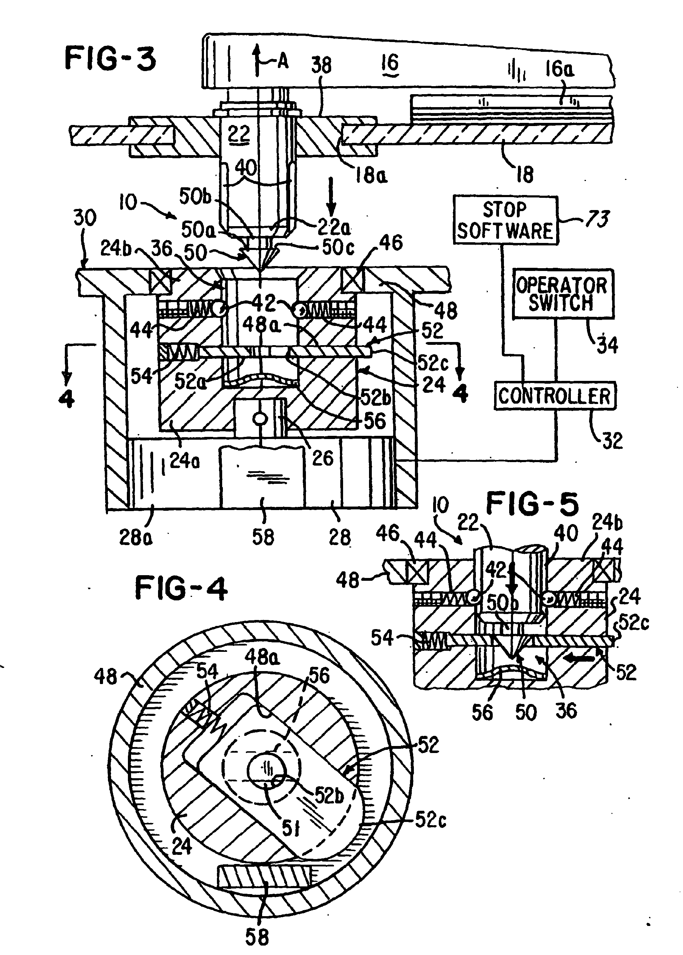

The wiper arm window latch system 10 comprises a rotatable and generally cylindrical rotatable member or post 22 on which the wiper arm 16 is mounted. The rotatable member 22 cooperates with a receiving drive coupler 24 to couple the wiper arm 16 to an output shaft 26 (Fig. 3) of a drive motor 28 which is mounted in a door 30 (Figs. 1 and 2) of the vehicle. As will be appreciated from the description later herein, the drive coupler 24 not only couples the wiper arm 16 to the drive motor 28, but also provides the locking mechanism for retaining and locking the window 18 in the closed position shown in Fig. 2.

Referring now to Fig. 3, the drive motor 28 may be any suitable drive motor for driving wiper arm 16, such as drive motor 4BE available from Valeo, Auburn Hills, MI. The drive motor 28 has the output shaft 26 which is secured by conventional means, such as a cotter pin, screw, key or retention ring to an end 24a of the drive coupler 24. As mentioned earlier herein, the drive coupler 24 couples and locks the wiper arm 16 to the drive motor 28 in order to latch the window 18 to the door 30 (Fig. 2). The drive coupler 24 also couples the wiper arm 16 to the drive motor 28 so that when the window 18 is in the closed position, the drive motor 28 may be energized by a controller 32 in order to rotatably drive the wiper motor 28 between the wipe positions A and B (Fig. 2) in order to wipe the window 18 free of debris.

The controller 32 is coupled to an operator switch 34 for controlling the operation of the wiper motor 28 in the manner described herein. The switch 34 is situated in the vehicle compartment 35 (Fig. 1) and may be any suitable switch, such as a rotary switch integrated into a turn signal indicator (not shown) or light control switch (not shown).

The drive coupler 24 comprises a receiving area 36 for receiving the rotatable member 22 and for securing the rotatable member 22 to the wiper arm 16. Note in Fig. 3 that the rotatable member 22 is rotatably secured in a bearing 38 in the window 18 as shown. In the embodiment being described, the bearing 38 is mounted in an aperture 18a in the glass 18 as shown.

Note that the rotatable member 22 comprises means for securing the rotatable member 22 to the drive coupler 24. In the embodiment being described, such means includes a plurality of recessed sockets or grooves 40 which cooperate with a plurality of balls 42 which are biased by springs 44 to lock into sockets or grooves 40 when the rotatable member 22 is fully received in receiving area 36 in order to lock the rotatable member 22 in the receiving area 36 of the drive coupler 24. It should also be appreciated that any suitable means may be used to couple the rotatable member 22 to the drive coupler 24.

The drive coupler 24 has a first end 24a mounted to the output shaft 26 of drive motor 28, as mentioned earlier, and a second end 24b rotatably mounted in a bearing 46 mentioned in a housing 48 in which the drive motor 28 is also securely mounted. Although not shown, it should be appreciated that the housing 48 may be integral with a housing 28a of drive motor 28. In the embodiment being described, the bearing 46 may be a sleeve bearing or ball bearing.

As previously mentioned, a feature of the wiper arm window latch system 10 is that it functions to retain, latch or lock the window 18 to the door 30 (Fig. 2) in order to retain the window 18 in a locked and closed position. In order to facilitate achieving this function and feature, the rotatable member 22 comprises a conically-shaped detent 50 (Fig. 3) and cylindrical connector portion 50b which is situated on an end 22a of the rotatable member 22. The detent 50 cooperates with a movable or actuatable lock or latch 52 which is driven among several positions, including a closed and locking position (shown in Figs. 3, 7 and 8), a partially open position (shown in Fig. 5) and a fully opened position (shown in Fig. 9). The movement among these positions will be described in further detail later herein.

Note that the lock 52 is received in a slot 48a in drive coupler 24 (Fig. 5) is biased by a spring 54 (Fig. 3) to the locking position. The latch system further comprises a spring 56 situated in drive coupler 24 for biasing and forcing a flange 50a of detent 50 against a bottom surface 52a of lock 52 when the drive coupler 24 is in the locked and latched position.

As illustrated in Figs. 4, 7-9, the latch 52 comprises an aperture 51 in wall 52b for receiving the detent 50. It should be appreciated that the spring 56 biases the rotatable member 22 in the direction of arrow A in Fig. 3 so that when the lock 52 is actuated to an open position (shown in Fig. 9 as described later), the detent 50 of rotatable member 22 is biased out of wall 52b and the rotatable member 22 is actuated out of receiving area 36. This enables the wiper arm 16 to be forced, biased or actuated towards the open position shown in Fig. 1.

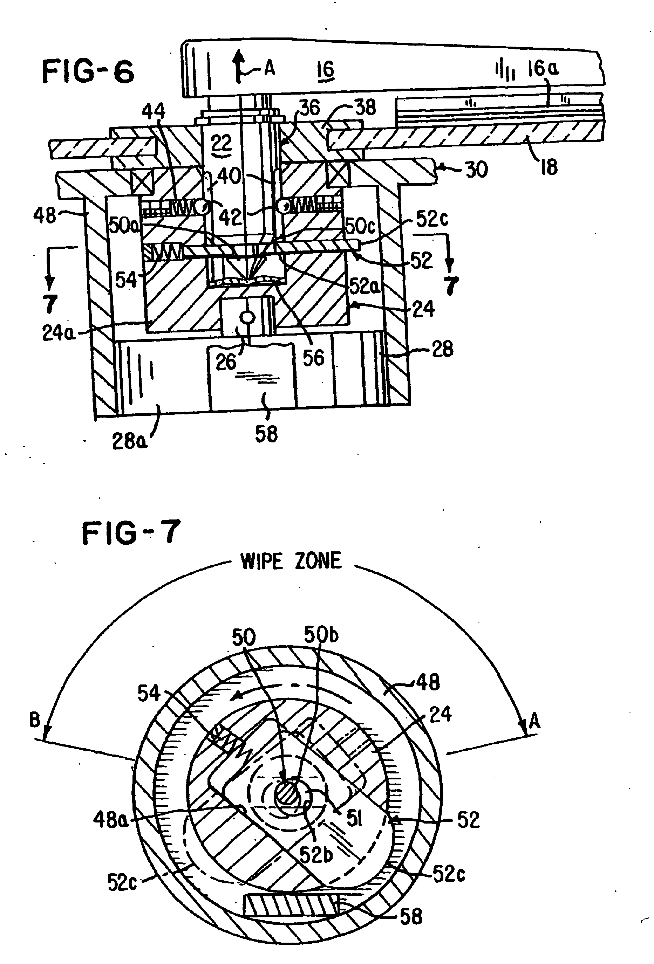

When the rotatable member 22 is driven into receiving area 36, conically-shaped flange 50a having an engaging surface 50c of detent 50 acts upon wall 52b to become driven in a direction opposite arrow A in Fig. 3 until flange 50a passes bottom surface 52a. At this point, wall 52b engages a cylindrical connector portion 50b which couples detent 50 to rotatable member 22. As best illustrated in Figs. 4-6, note that once the rotatable member 22 is driven until flange 50a clears bottom surface 52a, the lock 52 is biased by spring 54 to the right (as viewed in Fig. 6). Note also that spring 56 biases the rotatable member 22 in the direction of arrow A in Fig. 6 such that the surface 50c becomes biased against the bottom surface 52a. This causes the rotatable members 22 to be locked in drive coupler 24 and also causes the wiper arm 16 to be locked to drive motor 28, thereby also simultaneously locking window 18 to door 30.

It should be appreciated that it is only until the lock 52 is again biased to the left (as viewed in Fig. 6) to compress the spring 54 that the rotatable member 22 becomes unlocked from drive coupler 24. As illustrated in Fig. 9, in order to move aperture 51 and wall 52b such that a center axis of aperture 51 and a center axis of detent 50 and cylindrical connector portion 50b becomes coaxial as shown in Fig. 9. This alignment causes the detent 50 to be capable of being forced through aperture 51 of lock 52.

In order to cause the lock 52 to compress spring 54 and move to the left (as viewed in Fig. 6), the lock 52 is provided with a cam end 52c which is driven into engagement with a cam wall 58 on housing 48 when an operator actuates the operator switch 34 (Fig. 3) to open the window 18, as will be described later herein.

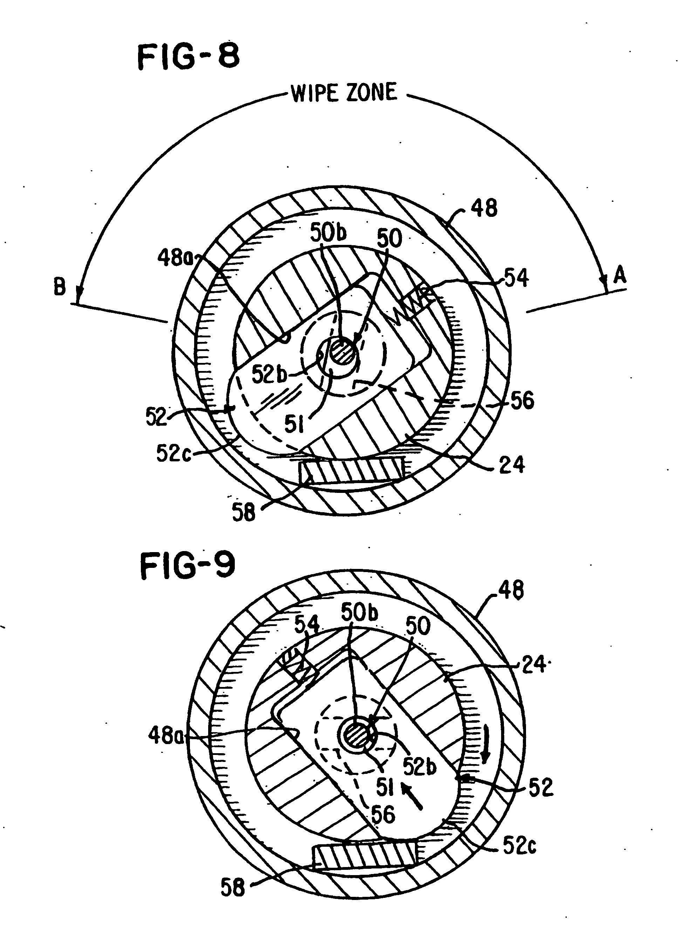

As illustrated in Figs. 4 and 7-9, after the wiper arm 16 is locked to drive motor 28 (by moving the window 18 to the closed position in Fig. 2), an operator may actuate the operator switch 34 when it is desired to either wipe or open the window 18. In response to an open command, the controller 32 energizes drive motor 28 to drive the wiper arm 16 and wiper blade 16a between the wipe positions A and B in order to remove any debris from the window 18 in a wipe zone defined between the area between positions A and B. As the drive motor 28 drives the wiper blade 16, the drive coupler 24 is also rotatably driven or oscillated between wipe positions A and B, as illustrated in Figs. 7 and 8, in response to a window wipe signal from controller 32, which is generated in response to an operator actuating the operator switch 34. When it is desired to open the window 18 (for example, when the vehicle is stopped), the operator actuates the operator switch 34 to cause controller 32 to energize drive motor 28 to rotatable drive the drive coupler 24 and lock 52 until the wiper arm 16 is driven into a stop 71(Fig.2), causing the motor torque to overcome the balls 42 and socket 40 drive couple, thereby de-coupling the drive coupler 24 from the rotatable member 22. Past this point, the wiper arm 16 remains in the park position on the glass while the cam end 52c is driven against a cam wall 58, as illustrated in Fig. 9. This forces the lock 52 to move in the direction of arrow B in Fig. 9, thereby compressing spring 54 until the center axis defined by wall 52b and the axis of connector portion 50b of detent 50 becomes coaxial. At this point, spring 56 forces surface 50c of detent 50 in the direction of arrow A (Fig. 3), thereby forcing the rotatable member 22 out of receiving area 36. This, in turn, causes thereby moving the window 18 to be driven towards the open position shown in Fig. 1. Advantageously, this system 10 provides a system and method for latching the window 18 to the door 30 by rotatably mounting the wiper arm 16 onto the window 18 and also for retaining the window 18 in the closed and locked position shown in Fig. 2.

Advantageously, this system and method provides means for using the drive motor 28 to not only drive the window wiper arm 16, but also to lock the window 18 to the door 30.

Another advantage of this invention is the balls 42 and sockets 40 design which permits the wiper arm 16 to be in any rotated 180° position when the rotatable member 22 is received in receiving area 36 of drive coupler 24, yet still be capable of being received in the receiving area 36. If the rotatable member 22 is received in receiving area 36 and the balls 42 and sockets 40 are not aligned when the drive motor 28 is energized by controller 32, the drive coupler 24 is rotatably driven and the balls 42 are biased against the rotatable member 22 and will "hunt" until they find the sockets 40, thereby locking the rotatable member 22 and wiper arm 16 to the wiper motor 28. This could be achieved by either manually moving the wiper arm or turning on the wiper motor.

It should be understood that a wiper torque, defined by the torque which the balls 42 and sockets 40 secure rotatable member 22 to the drive coupler 24 is less than a resilient detent torque, defined by a torque required to drive lock 52 to the open position (i.e., to the leftmost position shown in Fig. 6). The resilient detent torque and wiper torque are both less than the torque of the drive motor 28.

It should also be understood that the drive coupler 24 could be arranged on an end of wiper arm 16, with the shaft 26 of drive motor 28 being configured to snap fit or lock onto the drive coupler 24. Finally, although not shown, the system and method may include a mechanical stop 71 (Fig.2) or software 73 for causing controller 32 to stop the wiper arm 16 in order to keep the arm 16 and blade 16a on the window 18 during open and close operations. This also facilitates actuation of the latch and preventing the wiper arm 16 from interfering with or disturbing an operator.

## Claims

1. A wiper arm window latch system (10) comprising:
a wiper arm (16) rotatably mounted in a window (18) for wiping said window (18);
a drive motor (28) for driving said wiper arm (16), wherein said drive motor (28) is mounted on a door (30);
**characterized by**
a drive coupler (24) for coupling said wiper arm (16) to said drive motor (28) in order to latch said window (18) to said door (30) and also for coupling said wiper arm (16) to said drive motor (28) such that only when said window (18) is in a closed position said wiper arm (16) may be rotatably driven by said drive motor (28).

2. The system (10) according to claim 1, **characterized in that** said drive coupler (24) comprises a receiver (36) for receiving an end (22a) of a rotatable member on which said wiper arm (16) is mounted and a latch (52) associated with said receiver (36) for locking said wiper arm (16) onto said receiver (36).

3. The system (10) according to claim 2, **characterized in that** said end (22a) comprises at least one groove, having a lock comprising a resilient detent (50) for cooperating with said at least one groove to lock said end (22a) of said wiper arm (16) in said receiver (36).

4. The system (10) according to claim 3, **characterized in that** said drive coupler (24) comprises an axis, said resilient detent comprises at least one spring-loaded ball biased towards said axis and received in said at least one groove (40) to detachably lock said end of said wiper arm (16) to said drive motor (28) or in said receiver.

5. The system (10) according to claim 1, **characterized in that** said drive coupler (24) is located on an output shaft (26) of said drive motor (28).

6. The system (10) according to claim 1, **characterized in that** said drive coupler (24) comprises a spring (56) for biasing an insert end of said wiper arm (16) away from said drive coupler (24) so that when said drive coupler (24) unlatches said end said wiper arm (16) and said window (18) are thrust towards an open position.

7. The system (10) according to claim 1, **characterized in that** said latch system comprises a stop (71) for stopping said wiper arm (16) in a predetermined position.

8. The system (10) according to claim 7, **characterized in that** said stop is a mechanical stop.

9. The system (10) according to claim 7, **characterized in that** said stop is a software algorithm which causes a controller to stop the wiper arm in said predetermined position.

10. The system (10) according to claim 1, **characterized in that** said drive motor comprises an output shaft (26) and that said drive coupler (24) includes a latch release in order to detachably latch said wiper arm (16) to said drive motor (28) so that said window (18) becomes locked to said door (30); and a resilient detent (50) for detachably coupling said wiper arm (16) to said output shaft (26), regardless of a rotational position of said wiper arm (16).

11. The system (10) according to claim 10, **characterized in that** said latch release comprises a spring-actuated cam lock.

12. The system (10) according to claim 11, **characterized in that** said wiper arm (16) is mounted on a rotatable member which comprises an end comprising at least one groove, said spring-actuated cam lock comprising a resilient detent for cooperating with said at least one groove to lock said end of said wiper arm (16) in a receiver.

13. The system (10) according to claim 12, **characterized in that** said drive coupler (24) comprises an axis, said resilient detent comprises at least one spring-loaded ball (42) biased towards said axis and received in said at least one groove (40) to detachably lock said end of said rotatable member in said receiver.

14. The system (10) according to claim 1 or 10, **characterized in that** an end of said wiper arm (16) comprises a wiper latch, said drive coupler (24) comprises a cam member which cooperates with said wiper arm (16) to lock said window (18) to said door (30) and permitting said wiper arm (16) to rotate when driven by said drive motor (28).

15. The system (10) according to claim 5 or 14, **characterized in that** said drive latch or drive coupler (24) further comprises a cam wall (58) which said cam member engages when said drive motor (28) drives a wiper blade (16a) attached to said wiper arm (16) to an open position to unlock said window (18).

16. The system (10) according to claim 3 or 12, **characterized in that** a wiper blade (16a) attached to said wiper arm (16) comprises an associated wiper drive torque, said resilient detent comprises a resilient detent torque and said drive motor comprises a drive motor torque, said drive motor torque being greater than said resilient detent torque which is greater than said wiper drive torque.

17. The system (10) according to claim 1 or 10, **characterized in that** said drive coupler (24) comprises at least one spring-loaded ball.

18. The system (10) according to claim 1 or 10, **characterized in that** said wiper arm comprises an end for receipt in said drive coupler (24) in order to permit said end to be snap-fit into said drive coupler.

19. The system (10) according to claim 10 or 18, **characterized in that** said wiper arm (16) comprises an end for receipt in said drive coupler (24) and said end comprising a portion which is generally conical.

20. The system (10) according to claim 10, **characterized in that** said drive coupler (24) comprises a cam, said wiper system further comprising a controller (32) coupled to said drive motor (28) for controlling the operation of said drive motor (28) such that when said controller (32) energizes said drive motor (28) to open said window (18), said drive motor (28) drives said drive coupler (24) to cause said cam (52c) to engage a cam wall (58) to release an end of a rotatable member on which is mounted said wiper arm (16), thereby opening said window (18).

21. A method for locking a window (18) onto a door (30) and a wiper arm (16) onto an output shaft (26) of a drive motor (28) comprising the steps of:
rotatably mounting said wiper arm (16) onto said window (18); and
mounting said drive motor (30) for driving said wiper arm (16) onto a door (30);
**characterized by**
situating a drive coupler (24) onto said drive motor (30), wherein said drive coupler (24) latching said window (18) to said door (30) when said window (18) is in a closed position and substantially simultaneously coupling said wiper arm (16) to said drive motor (28) such that only when said window (18) is in said closed position said wiper arm (16) may be driven by said drive motor (28).

22. The method according to claim 21, **characterized in that** the further step of:
providing said drive coupler (24) comprising a receiver for receiving an end of a rotatable member on which the wiper arm is mounted;
providing said drive coupler (24) comprising a lock associated with said receiver for locking said wiper arm (16) onto said receiver.

23. The method according to claim 22, **characterized in that** said end comprises at least one groove (40), said method further comprises the step of providing said drive coupler (24) comprising a lock comprising a resilient detent for cooperating with said at least one groove (40) to lock said end of said wiper arm (16) in said receiver.

24. The method according to claim 23, **characterized in that** said drive coupler (24) comprises an axis, said method comprising the step of situating at least one spring-loaded ball (42) biased towards said axis in said drive coupler (24) to be received in said at least one groove (40) in order to detachably lock said end of said wiper arm (16) in said receiver.

25. The method according to claim 21, **characterized in that** said method comprises the steps of:
providing a window wiper comprising an end having a wiper latch,
providing said drive coupler (24) comprising a cam member which cooperates with said wiper latch to lock said window (18) to said door (30) while permitting said wiper arm (16) to rotate when driven by said drive motor (30).

26. The method according to claim 25, **characterized in that** said drive coupler (24) further comprises a cam wall, said method comprising the step of positioning said cam wall in proximity to said cam member so that when said drive motor (28) drives said wiper arm (16) to a window open position, said window (18) is unlocked.

27. The method according to claim 23, **characterized in that** said method further comprises the step of providing a wiper blade (16a) comprising an associated wiper drive torque which is less than a resilient detent torque of said resilient detent which is less than a drive motor torque of said drive motor (30).

28. The method according to claim 21, **characterized in that** said method further comprises the step of stopping the wiper arm (16) on said window (18).

29. The method according to claim 28, **characterized in that** said method further comprises the step of using a mechanical stop (71) to stop the wiper arm (16) on said window (18).

30. The method according to claim 28, **characterized in that** said method further comprises the step of using a stopping routine to cause a controller (32) to stop said wiper arm (16).

31. The method according to claim 21, **characterized in** using the drive coupler (24) to couple said wiper arm (16) to said drive motor (30) and to also retain the window (18) in a closed position.

32. The method according to claim 31, **characterized in that** said method further comprises the step of providing said drive coupler (24) on an output shaft (26) of said drive motor (30).

33. The method according to claim 31, **characterized in that** said method further comprises the step of providing said drive coupler (24) having at least one spring-loaded ball (42).

34. The method according to claim 32, **characterized in that** said method further comprises the step of providing said wiper arm (16) being mountable on a rotatable member with a notched end for receipt in said drive coupler (24) in order to permit said end to be snap-fit into said drive coupler (24).

35. The method according to claim 34, **characterized in that** said method further comprises the step of providing on said end comprising a portion which is conical.

36. The method according to claim 35, **characterized in that** said method further comprises the step of providing said drive coupler (24) having a cam (52c), and providing a controller (32) for controlling the operation of said drive motor (28) such that when said controller (32) energizes said drive motor (28) to open said window (18), said drive motor (28) drives said drive coupler (24) to cause said cam (52c) to engage a cam wall (58) to release said end of said wiper arm (16) , thereby opening said window (18).

37. The method according to claim 21, **characterized in that** said method comprises the step of driving said drive coupler (24) to a first position where said drive motor (28) is de-coupled from said wiper arm (16).

38. The method according to claim 21 or 37, **characterized in that** said method further comprises the step of driving said drive coupler (24) to a second position where said window (18) becomes unlatched from said door (30).

## Patentansprüche

1. Wischerarm-Fensterschließ-System (10), umfassend:
einen Wischerarm (16), der drehbar in einem Fenster (18) zum Wischen des Fensters (18) angebracht ist,
ein Antrieb (28) zum Bewegen des Wischerarms (16), wobei der Antrieb (28) an einer Tür (30) angebracht ist,
**gekennzeichnet durch**
einen Antriebskoppler (24) zur Kopplung des Wischerarms (16) an den Antrieb (28), um das Fenster (18) gegen die Tür (30) zu schließen, und auch zur Kopplung des Wischerarms (16) an den Antrieb (28) solcherart, dass nur, wenn das Fenster (18) in einer geschlossenen Position ist, der Wischerarm (16) **durch** den Antrieb (28) drehbar bewegt werden kann.

2. System (10) nach Anspruch 1, **dadurch gekennzeichnet, dass** der Antriebskoppler (24) einen Aufnehmer (36) umfasst, der ein Ende (22a) eines Drehelements aufnimmt, an dem der Wischerarm (16) angebracht ist, und einen Verschluss (52), der mit dem Aufnehmer (36) verbunden ist, zum Arretieren des Wischerarms (16) an dem Aufnehmer (36).

3. System (10) nach Anspruch 2, **dadurch gekennzeichnet, dass** das Ende (22a) mindestens eine Kerbe enthält, dass es ein Schloss aufweist, das eine federnde Raste (50) umfasst, die mit der mindestens einen Kerbe zusammenwirkt, um das Ende (22a) des Wischerarms (16) in dem Aufnehmer (36) zu arretieren.

4. System (10) nach Anspruch 3, **dadurch gekennzeichnet, dass** der Antriebskoppler (24) eine Achse umfasst, dass die federnde Raste mindestens eine federbelastete Kugel umfasst, die gegen die Achse gedrückt und in der mindestens einen Kerbe (40) aufgenommen wird, um das Ende des Wischerarms (16) lösbar an dem Antrieb (28) oder in dem Aufnehmer zu arretieren.

5. System (10) nach Anspruch 1, **dadurch gekennzeichnet, dass** sich der Antriebskoppler (24) auf einer Arbeitswelle (26) des Antriebs (28) befindet.

6. System (10) nach Anspruch 1, **dadurch gekennzeichnet, dass** der Antriebskoppler (24) eine Feder (56) umfasst, die ein eingesetztes Ende des Wischerarms (16) von dem Antriebskoppler (24) weg spannt, so dass, wenn der Antriebskoppler (24) das Ende freigibt, der Wischerarm (16) und das Fenster (18) in eine geöffnete Position gestoßen werden.

7. System (10) nach Anspruch 1, **dadurch gekennzeichnet, dass** das Verschlusssystem einen Halt (71) zum Anhalten des Wischerarms (16) in einer vorbestimmten Position umfasst.

8. System (10) nach Anspruch 7, **dadurch gekennzeichnet, dass** der Halt ein mechanischer Halt ist.

9. System (10) nach Anspruch 7, **dadurch gekennzeichnet, dass** der Halt ein Software-Algorithmus ist, der eine Steuerung veranlasst, den Wischerarm in der vorbestimmten Position anzuhalten.

10. System (10) nach Anspruch 1, **dadurch gekennzeichnet, dass** der Antrieb eine Arbeitswelle (26) umfasst und dass der Antriebskoppler (24) einen Verschlussöffner umfasst, um den Wischerarm (16) lösbar an dem Antrieb (28) zu befestigen, so dass das Fenster (18) gegen die Tür (30) arretiert wird, und eine federnde Raste (50), um den Wischerarm (16) unabhängig von einer Drehposition des Wischerarms (16) lösbar mit der Arbeitswelle (26) zu koppeln.

11. System (10) nach Anspruch 10, **dadurch gekennzeichnet, dass** der Verschlussöffner ein federgetriebenes Steuerkurvenschloss umfasst.

12. System (10) nach Anspruch 11, **dadurch gekennzeichnet, dass** der Wischerarm (16) an einem Drehelement befestigt ist, das ein Ende mit mindestens einer Kerbe umfasst, wobei das federgetriebene Steuerkurvenschloss eine federnde Raste zum Zusammenwirken mit der mindestens einen Kerbe an dem Ende des Wischerarms (16) in einem Aufnehmer umfasst.

13. System (10) nach Anspruch 12, **dadurch gekennzeichnet, dass** der Antriebskoppler (24) eine Achse umfasst, dass die federnde Raste mindestens eine federbelastete Kugel (42) umfasst, die gegen die Achse gedrückt und in der mindestens einen Kerbe (40) aufgenommen wird, um das Ende des Drehelements lösbar in dem Aufnehmer zu arretieren.

14. System (10) nach Anspruch 1 oder 10, **dadurch gekennzeichnet, dass** ein Ende des Wischerarms (16) einen Wischerverschluss umfasst, dass der Antriebskoppler (24) ein Steuerkurvenelement enthält, das mit dem Wischerarm (16) zusammenwirkt, um das Fenster (18) gegen die Tür (30) zu arretieren und um dem Wischerarm (16) die Drehung zu ermöglichen, wenn er von dem Antrieb (28) bewegt wird.

15. System (10) nach Anspruch 5 oder 14, **dadurch gekennzeichnet, dass** der Antriebsverschluss oder Antriebskoppler (24) ferner eine Wandung (58) umfasst, gegen die das Steuerkurvenelement anschlägt, wenn der Antrieb (28) ein Wischerblatt (16a), das an dem Wischerarm (16) befestigt ist, in eine geöffnete Position bewegt, um das Fenster (18) aus der Arretierung zu lösen.

16. System (10) nach Anspruch 3 oder 12, **dadurch gekennzeichnet, dass** ein Wischerblatt (16a), das an dem Wischerarm (16) befestigt ist, ein damit verbundenes Wischerantriebsmoment umfasst, dass die federnde Raste ein Federmoment der Raste umfasst und dass der Antrieb ein Antriebsdrehmoment umfasst, wobei das Antriebsdrehmoment größer ist als das Federmoment der Raste, welches größer ist als das Wischerantriebsmoment.

17. System (10) nach Anspruch 1 oder 10, **dadurch gekennzeichnet, dass** der Antriebskoppler (24) mindestens eine federbelastete Kugel umfasst.

18. System (10) nach Anspruch 1 oder 10, **dadurch gekennzeichnet, dass** der Wischerarm ein Ende zur Aufnahme in dem Antriebskoppler (24) umfasst, um es dem Ende zu ermöglichen, in den Antriebskoppler eingerastet zu werden.

19. System (10) nach Anspruch 10 oder 18, **dadurch gekennzeichnet, dass** der Wischerarm (16) ein Ende zur Aufnahme in dem Antriebskoppler (24) umfasst und das Ende einen Abschnitt umfasst, der im Allgemeinen konisch ist.

20. System (10) nach Anspruch 10, **dadurch gekennzeichnet, dass** der Antriebskoppler (24) einen Steuerkurve umfasst, dass das Wischersystem ferner eine Steuerung (32) umfasst, die an den Antrieb (28) gekoppelt ist, um den Betrieb des Antriebs (28) so zu steuern, dass, wenn die Steuerung (32) den Antrieb (28) einschaltet, um das Fenster (18) zu öffnen, der Antrieb (28) den Antriebskoppler (24) bewegt, um die Steuerkurve (52c) zu veranlassen, an einer Wandung (58) anzuschlagen, um eine Ende eines Drehelements, auf dem der Wischerarm (16) angebracht ist, freizugeben und somit das Fenster (18) zu öffnen.

21. Verfahren zum Arretieren eines Fensters (18) gegen eine Tür (30) und zum Befestigen eines Wischerarms (16) an einer Arbeitwelle (26) eines Antriebs (28), umfassend die Schritte:
des drehbaren Anbringens des Wischerarms (16) an dem Fenster (18) und
des Anbringens des Antriebs (28) zum Bewegen des Wischerarms (16) an einer Tür (30),
**gekennzeichnet durch**
das Anbringen eines Antriebskopplers (24) an dem Antrieb (28), wobei der Antriebskoppler (24) das Fenster (18) gegen die Tür (30) schließt, wenn das Fenster (18) in einer geschlossenen Position ist, und wobei der Antriebskoppler im Wesentlichen gleichzeitig den Wischerarm (16) so mit dem Antrieb (28) koppelt, dass nur, wenn das Fenster (18) in der geschlossenen Position ist, der Wischerarm (16) **durch** den Antrieb (28) bewegt werden kann.

22. Verfahren nach Anspruch 21, **gekennzeichnet durch** den weiteren Schritt:
des Bereitstellens des Antriebskopplers (24), der einen Aufnehmer zur Aufnahme eines Endes eines Drehelements umfasst, auf dem der Wischerarm angebracht ist,
des Bereitstellens des Antriebskopplers (24), der ein mit dem Aufnehmer verbundenes Schloss aufweist, um den Wischerarm (16) an dem Aufnehmer zu befestigen.

23. Verfahren nach Anspruch 22, **dadurch gekennzeichnet, dass** das Ende mindestens eine Kerbe (40) umfasst, und dass das Verfahren ferner einen Schritt des Bereitstellens des Antriebskopplers (24) umfasst, der ein Schloss mit einer federnden Raste zur Zusammenwirkung mit der mindestens einen Kerbe (40) umfasst, um das Ende des Wischerarms (16) in dem Aufnehmer zu arretieren.

24. Verfahren nach Anspruch 23, **dadurch gekennzeichnet, dass** der Antriebskoppler (24) eine Achse umfasst und dass das Verfahren ferner den Schritt des Unterbringens mindestens einer federbelasteten Kugel (42) in dem Antriebskoppler (24) umfasst, die gegen die Achse gedrückt wird, um in der mindestens einen Kerbe (40) aufgenommen zu werden, um das Ende des Wischerarms (16) lösbar in dem Aufnehmer zu arretieren.

25. Verfahren nach Anspruch 21, **dadurch gekennzeichnet, dass** das Verfahren die Schritte umfasst:
das Bereitstellen eines Scheibenwischers, der ein Ende mit einem Wischerverschluss umfasst,
das Bereitstellen des Antriebskopplers (24), der ein Steuerkurvenelement umfasst, das mit dem Wischerverschluss zusammenwirkt, um das Fenster (18) gegen die Tür (30) zu arretieren und gleichzeitig das Drehen des Wischerarms (16) zu ermöglichen, wenn er von dem Antrieb (28) bewegt wird.

26. Verfahren nach Anspruch 25, **dadurch gekennzeichnet, dass** der Antriebskoppler (24) ferner eine Wandung umfasst und dass das Verfahren den Schritt des Positionierens der Wandung in der Nähe des Steuerkurvenelements umfasst, so dass, wenn der Antrieb (28) den Wischerarm (16) in eine geöffnete Fensterposition bewegt, das Fenster (18) aus der Arretierung gelöst wird.

27. Verfahren nach Anspruch 23, **dadurch gekennzeichnet, dass** das Verfahren ferner den Schritt des Bereitstellens eines Wischerblatts (16a) umfasst, das ein damit verbundenes Wischerantriebsmoment umfasst, das geringer ist als ein Federmoment der federnden Raste, das wiederum geringer als das Antriebsdrehmoment des Antriebs (28) ist.

28. Verfahren nach Anspruch 21, **dadurch gekennzeichnet, dass** das Verfahren ferner den Schritt des Anhaltens des Wischerarms (16) auf dem Fenster (18) umfasst.

29. Verfahren nach Anspruch 28, **dadurch gekennzeichnet, dass** das Verfahren ferner den Schritt des Verwendens eines mechanischen Halts (71) umfasst, um den Wischerarm (16) auf dem Fenster (18) anzuhalten

30. Verfahren nach Anspruch 28, **dadurch gekennzeichnet, dass** das Verfahren ferner den Schritt des Verwendens eines Anhalteprogramms umfasst, um eine Steuerung (32) zu veranlassen, den Wischerarm (16) anzuhalten.

31. Verfahren nach Anspruch 21, **gekennzeichnet durch** die Verwendung des Antriebskopplers (24), um den Wischerarm (16) mit dem Antrieb (28) zu koppeln und auch, um das Fenster (18) in einer geschlossenen Position zu halten.

32. Verfahren nach Anspruch 31, **dadurch gekennzeichnet, dass** das Verfahren ferner den Schritt des Bereitstellens des Antriebskopplers (24) an der Arbeitwelle (26) des Antriebs (28) umfasst.

33. Verfahren nach Anspruch 31, **dadurch gekennzeichnet, dass** das Verfahren ferner den Schritt des Bereitstellens des Antriebskopplers (24) mit mindestens einer federbelasteten Kugel (42) umfasst.

34. Verfahren nach Anspruch 32, **dadurch gekennzeichnet, dass** das Verfahren ferner den Schritt des Bereitstellens des Wischerarms (16) umfasst, der an einem Drehelement mit einem gekerbten Ende zur Aufnahme in den Antriebskoppler (24) angebracht werden kann, um das Einrasten des Endes in den Antriebskoppler (24) zu ermöglichen.

35. Verfahren nach Anspruch 34, **dadurch gekennzeichnet, dass** das Verfahren ferner den Schritt des Bereitstellens eines konischen Abschnitts an dem Ende umfasst.

36. Verfahren nach Anspruch 35, **dadurch gekennzeichnet, dass** das Verfahren ferner den Schritt des Bereitstellens des Antriebskopplers (24) mit einer Steuerkurve (52c) und des Bereitstellens einer Steuerung (32) umfasst, um den Betrieb des Antriebs (28) so zu regeln, dass, wenn die Steuerung (32) den Antrieb (28) anschaltet, um das Fenster (18) zu öffnen, der Antrieb (28) den Antriebskoppler (24) bewegt, um die Steuerkurve (52c) zu veranlassen, an einer Wandung (58) anzuschlagen, um das Ende des Wischerarms (16) freizugeben und somit das Fenster (18) zu öffnen.

37. Verfahren nach Anspruch 21, **dadurch gekennzeichnet, dass** das Verfahren den Schritt des Bewegens des Antriebskopplers (24) in eine erste Position umfasst, wo der Antrieb (28) von dem Wischerarm (16) entkoppelt wird.

38. Verfahren nach Anspruch 21 oder 37, **dadurch gekennzeichnet, dass** das Verfahren ferner den Schritt des Bewegens des Antriebskopplers (24) in eine zweite Position umfasst, wo das Fenster (18) von der Tür (30) gelöst wird.

## Revendications

1. Système de fermeture de vitre à bras d'essuie-glace (10) comprenant :
un bras d'essuie-glace (16) monté par rotation sur une vitre (18) pour balayer ladite vitre (18) ;
un moteur d'entraînement (28) permettant d'entraîner ledit bras d'essuie-glace (16), dans lequel ledit moteur d'entraînement (28) est monté sur une porte (30) ; **caractérisé par** :
un coupleur d'entraînement (24) permettant de coupler ledit bras d'essuie-glace (16) audit moteur d'entraînement (28), afin de fermer ladite vitre (18) sur ladite porte (30) et permettant également de coupler ledit bras d'essuie-glace (16) audit moteur d'entraînement (28), de telle sorte que seulement lorsque ladite vitre (18) est en position fermée, ledit bras d'essuie-glace (16) peut être entraîné par rotation par ledit moteur d'entraînement (28).

2. Système (10) selon la revendication 1, **caractérisé en ce que** ledit coupleur d'entraînement (24) comprend un récepteur (36) permettant de recevoir une extrémité (22a) d'un élément rotatif sur lequel ledit bras d'essuie-glace (16) est monté et un verrou (52) associé audit récepteur (36) permettant de verrouiller ledit bras d'essuie-glace (16) sur ledit récepteur (36).

3. Système (10) selon la revendication 2, **caractérisé en ce que** ladite extrémité (22a) comprend au moins une rainure, ayant un verrou comprenant un cliquet élastique (50) permettant de coopérer avec ladite au moins une rainure pour verrouiller ladite extrémité (22a) dudit bras d'essuie-glace (16) dans ledit récepteur (36).

4. Système (10) selon la revendication 3, **caractérisé en ce que** ledit coupleur d'entraînement (24) comprend un axe, ledit cliquet élastique comprend au moins une bille inclinée vers ledit axe et reçue dans ladite au moins une rainure (40) pour verrouiller de façon amovible ladite extrémité dudit bras d'essuie-glace (16) audit moteur d'entraînement (28) ou dans ledit récepteur.

5. Système (10) selon la revendication 1, **caractérisé en ce que** ledit coupleur d'entraînement (24) est situé sur un arbre de sortie (26) dudit moteur d'entraînement (28).

6. Système (10) selon la revendication 1, **caractérisé en ce que** ledit coupleur d'entraînement (24) comprend un ressort (56) permettant d'incliner une extrémité d'insertion dudit bras d'essuie-glace (16) à distance dudit coupleur d'entraînement (24), de telle sorte que, lorsque ledit coupleur d'entraînement (24) n'est plus verrouillé par rapport à ladite extrémité, ledit bras d'essuie-glace (16) et ladite vitre (18) sont poussés vers une position ouverte.

7. Système (10) selon la revendication 1, **caractérisé en ce que** ledit système de verrouillage comprend une butée (71) permettant d'arrêter ledit bras d'essuie-glace (16) en une position prédéterminée.

8. Système (10) selon la revendication 7, **caractérisé en ce que** ladite butée est une butée mécanique.

9. Système (10) selon la revendication 7, **caractérisé en ce que** ladite butée est un algorithme logiciel qui pousse un dispositif de commande à arrêter le bras d'essuie-glace dans ladite position prédéterminée.

10. Système (10) selon la revendication 1, **caractérisé en ce que** ledit moteur d'entraînement comprend un arbre de sortie (26) et **en ce que** ledit coupleur d'entraînement (24) inclut une libération du verrou afin de verrouiller de façon amovible ledit bras d'essuie-glace (16) audit moteur d'entraînement (28), de telle sorte que ladite vitre (18) soit verrouillée sur ladite porte (30) ; et un cliquet élastique (50) permettant de coupler de façon amovible ledit bras d'essuie-glace (16) audit arbre de sortie (26), quelle que soit la position de rotation dudit bras d'essuie-glace (16).

11. Système (10) selon la revendication 10, **caractérisé en ce que** ladite libération de verrou comprend un verrou de came actionné par ressort.

12. Système (10) selon la revendication 11, **caractérisé en ce que** ledit bras d'essuie-glace (16) est monté sur un élément rotatif qui comprend une extrémité comprenant au moins une rainure, ledit verrou de came actionné par ressort comprenant un cliquet élastique permettant de coopérer avec ladite au moins une rainure pour verrouiller ladite extrémité dudit bras d'essuie-glace (16) dans un récepteur.

13. Système (10) selon la revendication 12, **caractérisé en ce que** ledit coupleur d'entraînement (24) comprend un axe, ledit cliquet élastique comprend au moins une bille (42) inclinée vers ledit axe et reçue dans ladite au moins une rainure (40) pour verrouiller de façon amovible ladite extrémité dudit élément rotatif dans ledit récepteur.

14. Système (10) selon la revendication 1 ou 10, **caractérisé en ce qu'**une extrémité dudit bras d'essuie-glace (16) comprend un verrou d'essuie-glace, ledit coupleur d'entraînement (24) comprend un élément de came qui coopère avec ledit bras d'essuie-glace (16) pour verrouiller ladite vitre (18) sur ladite porte (30) et permettant audit bras d'essuie-glace (16) de pivoter lorsqu'il est actionné par ledit moteur d'entraînement (28).

15. Système (10) selon la revendication 5 ou 14, **caractérisé en ce que** ledit verrou d'entraînement ou ledit coupleur d'entraînement (24) comprend en outre une paroi de came (58), dans laquelle s'engage ledit élément de came lorsque ledit moteur d'entraînement (28) entraîne une lame d'essuie-glace (16a) attachée audit bras d'essuie-glace (16) vers une position ouverte pour déverrouiller ladite vitre (18).

16. Système (10) selon la revendication 3 ou 12, **caractérisé en ce qu'**une lame d'essuie-glace (16a) attachée audit bras d'essuie-glace (16) comprend un couple d'entraînement d'essuie-glace associé, ledit cliquet élastique comprend un couple de cliquet élastique et ledit moteur d'entraînement comprend un couple moteur d'entraînement, ledit couple moteur d'entraînement étant supérieur audit couple de cliquet élastique qui est supérieur audit couple d'entraînement d'essuie-glace.

17. Système (10) selon la revendication 1 ou 10, **caractérisé en ce que** ledit coupleur d'entraînement (24) comprend au moins une bille.

18. Système (10) selon la revendication 1 ou 10, **caractérisé en ce que** ledit bras d'essuie-glace comprend une extrémité pour la réception dans ledit coupleur d'entraînement (24) afin de permettre à ladite extrémité de s'emboîter dans ledit coupleur d'entraînement.

19. Système (10) selon la revendication 10 ou 18, **caractérisé en ce que** ledit bras d'essuie-glace (16) comprend une extrémité pour la réception dans ledit coupleur d'entraînement (24) et ladite extrémité comprenant une partie qui est généralement conique.

20. Système (10) selon la revendication 10, **caractérisé en ce que** ledit coupleur d'entraînement (24) comprend une came, ledit système d'essuie-glace comprenant en outre un dispositif de commande (32) couplé audit moteur d'entraînement (28) permettant de commander le fonctionnement dudit moteur d'entraînement (28), de telle sorte que lorsque ledit dispositif de commande (32) met sous tension ledit moteur d'entraînement (28) pour ouvrir ladite vitre (18), ledit moteur d'entraînement (28) entraîne ledit coupleur d'entraînement (24) pour pousser ladite came (52c) à s'engager dans une paroi de came (58) pour libérer une extrémité d'un élément rotatif sur laquelle est monté ledit bras d'essuie-glace (16), ouvrant ainsi ladite vitre (18).

21. Procédé de verrouillage d'une fenêtre (18) sur une porte (30) et d'un bras d'essuie-glace (16) sur un arbre de sortie (26) d'un moteur d'entraînement (28) comprenant les étapes consistant à :
monter par rotation ledit bras d'essuie-glace (16) sur ladite vitre (18) ; et
monter ledit moteur d'entraînement (28) permettant d'entraîner ledit bras d'essuie-glace (16) sur une porte (30) ;
**caractérisé par**
le placement d'un coupleur d'entraînement (24) sur ledit moteur d'entraînement (28), dans lequel ledit coupleur d'entraînement (24) verrouillant ladite vitre (18) sur ladite porte (30) lorsque ladite vitre (18) est en position fermée et en couplant sensiblement simultanément ledit bras d'essuie-glace (16) audit moteur d'entraînement (28), de telle sorte que ledit bras d'essuie-glace (16) peut être entraîné par ledit moteur d'entraînement (28), uniquement lorsque ladite vitre (18) est dans ladite position fermée.

22. Procédé selon la revendication 21, **caractérisé en ce qu'**il comprend en outre l'étape consistant à :
fournir ledit coupleur d'entraînement (24) comprenant un récepteur permettant de recevoir une extrémité d'un élément rotatif sur lequel est monté le bras d'essuie-glace ;
fournir ledit coupleur d'entraînement (24) comprenant un verrou associé audit récepteur permettant de verrouiller ledit bras d'essuie-glace (16) sur ledit récepteur.

23. Procédé selon la revendication 22, **caractérisé en ce que** ladite extrémité comprend au moins une rainure (40), ledit procédé comprend en outre l'étape consistant à fournir ledit coupleur d'entraînement (24) comprenant un verrou comprenant un cliquet élastique permettant de coopérer avec ladite au moins une rainure (40) pour verrouiller ladite extrémité dudit bras dessuie-glace (16) dans ledit récepteur.

24. Procédé selon la revendication 23, **caractérisé en ce que** ledit coupleur d'entraînement (24) comprend un axe, ledit procédé comprenant l'étape consistant à situer au moins une bille (42) inclinée vers ledit axe dans ledit coupleur d'entraînement (24) devant être reçue dans ladite au moins une rainure (40) afin de verrouiller de façon amovible ladite extrémité dudit bras d'essuie-glace (16) dans ledit récepteur.

25. Procédé selon la revendication 21, **caractérisé en ce que** ledit procédé comprend les étapes consistant à :
fournir un essuie-glace comprenant une extrémité ayant un verrou d'essuie-glace,
fournir ledit coupleur d'entraînement (24) comprenant un élément de came qui coopère avec ledit verrou d'essuie-glace pour verrouiller ladite vitre (18) par rapport à ladite porte (30), tout en permettant audit bras d'essuie-glace (16) de pivoter lorsqu'il est entraîné par ledit moteur d'entraînement (28).

26. Procédé selon la revendication 25, **caractérisé en ce que** ledit coupleur d'entraînement (24) comprend en outre une paroi de came, ledit procédé comprenant l'étape consistant à positionner ladite paroi de came à proximité dudit élément de came, de telle sorte que lorsque ledit moteur d'entraînement (28) entraîne ledit bras d'essuie-glace (16) vers une position ouverte, ladite vitre (18) est déverrouillée.

27. Procédé selon la revendication 23, **caractérisé en ce que** ledit procédé comprend en outre l'étape consistant à fournir une lame d'essuie-glace (16a) comprenant un couple d'entraînement d'essuie-glace associé qui est inférieur à un couple de cliquet élastique dudit cliquet élastique qui est inférieur à un couple moteur d'entraînement dudit moteur d'entraînement (28).

28. Procédé selon la revendication 21, **caractérisé en ce que** ledit procédé comprend en outre l'étape consistant à arrêter le bras d'essuie-glace (16) sur ladite vitre (18).

29. Procédé selon la revendication 28, **caractérisé en ce que** ledit procédé comprend en outre l'étape consistant à utiliser une butée mécanique (71) pour arrêter le bras d'essuie-glace (16) sur ladite vitre (18).

30. Procédé selon la revendication 28, **caractérisé en ce que** ledit procédé comprend en outre l'étape consistant à utiliser un programme d'arrêt permettant de pousser un dispositif de commande (32) à arrêter ledit bras d'essuie-glace (16).

31. Procédé selon la revendication 21, **caractérisé par** l'utilisation du coupleur d'entraînement (24) pour coupler ledit bras d'essuie-glace (16) audit moteur d'entraînement (28) et aussi pour maintenir la vitre (18) dans une position fermée.

32. Procédé selon la revendication 31, **caractérisé en ce que** ledit procédé comprend en outre l'étape consistant à fournir ledit coupleur d'entraînement (24) sur un arbre de sortie (26) dudit moteur d'entraînement (28).

33. Procédé selon la revendication 31, **caractérisé en ce que** ledit procédé comprend en outre l'étape consistant à fournir ledit coupleur d'entraînement (24) ayant au moins une bille (42).

34. Procédé selon la revendication 32, **caractérisé en ce que** ledit procédé comprend en outre l'étape consistant à fournir ledit bras d'essuie-glace (16) pouvant être monté sur un élément rotatif avec une extrémité à encoche pour la réception dans ledit coupleur d'entraînement (24) afin de permettre à ladite extrémité de s'emboîter dans ledit coupleur d'entraînement (24).

35. Procédé selon la revendication 34, **caractérisé en ce que** ledit procédé comprend en outre l'étape consistant à fournir sur ladite extrémité une partie conique.

36. Procédé selon la revendication 35, **caractérisé en ce que** ledit procédé comprend en outre l'étape consistant à fournir ledit coupleur d'entraînement (24) ayant une came (52c), et à fournir un dispositif de commande (32) permettant de commander le fonctionnement dudit moteur d'entraînement (28), de telle sorte que lorsque ledit dispositif de commande (32) met sous tension ledit moteur d'entraînement (28) pour ouvrir ladite fenêtre (18), ledit moteur d'entraînement (28) entraîne ledit coupleur d'entraînement (24) pour pousser ladite came (52c) à s'engager dans une paroi de came (58) pour libérer ladite extrémité dudit bras d'essuie-glace (16), ouvrant ainsi ladite fenêtre (18).

37. Procédé selon la revendication 21, **caractérisé en ce que** ledit procédé comprend l'étape consistant à entraîner ledit coupleur d'entraînement (24) vers une première position où ledit moteur d'entraînement (28) est découplé dudit bras d'essuie-glace (16).

38. Procédé selon la revendication 21 ou 37, **caractérisé en ce que** ledit procédé comprend en outre l'étape consistant à entraîner ledit coupleur d'entraînement (24) vers une deuxième position dans laquelle ladite fenêtre (18) est déverrouillée de ladite porte (30).
